# EUROPÄISCHE PATENTSCHRIFT

(11) **EP 2 243 013 B1**
(45) Veröffentlichungstag und Bekanntmachung des Hinweises auf die Patenterteilung: **05.07.2017**
(21) Anmeldenummer: 09713214.6
(22) Anmeldetag: 09.02.2009
(51) Int. Cl.: G01K 7/22, H01C 7/02, H01C 7/04

(54) **VERBUNDWERKSTOFF ZUR TEMPERATURMESSUNG, TEMPERATURSENSOR AUFWEISEND DEN VERBUNDWERKSTOFF UND VERFAHREN ZUR HERSTELLUNG DES VERBUNDWERKSTOFFS UND DES TEMPERATURSENSORS**
COMPOSITE MATERIAL FOR TEMPERATURE MEASUREMENT, TEMPERATURE SENSOR COMPRISING THE COMPOSITE MATERIAL, AND METHOD FOR PRODUCING THE COMPOSITE MATERIAL AND THE TEMPERATURE SENSOR
MATÉRIAU COMPOSITE POUR LA MESURE DE TEMPÉRATURE, CAPTEUR DE TEMPÉRATURE COMPORTANT CE MATÉRIAU COMPOSITE, ET PROCÉDÉS DE FABRICATION DU MATÉRIAU COMPOSITE ET DU CAPTEUR DE TEMPÉRATURE

(30) Priorität: 19.02.2008 DE 102008009817
(43) Veröffentlichungstag der Anmeldung: 27.10.2010
(73) Patentinhaber: Epcos AG, 81669 München (DE)
(72) Erfinder: KLOIBER, Gerald, 8073 Feldkirchen (AT); STRALLHOFER, Heinz, 8530 Deutschlandsberg (AT)
(74) Vertreter: Epping - Hermann - Fischer
(86) Internationale Anmeldenummer: PCT/DE2009/000174
(87) Internationale Veröffentlichungsnummer: WO 2009/103261

(56) Entgegenhaltungen:
- EP-A- 0 901 134
- EP-A- 1 122 211
- EP-A- 1 231 613
- EP-A1- 0 649 150
- DE-A1- 19 952 127
- US-A- 5 568 116
- US-A1- 2008 006 796
- US-B1- 6 218 928

## Beschreibung

Die Erfindung betrifft einen Verbundwerkstoff zur Temperaturmessung und ein Verfahren zur Herstellung des Verbundwerkstoffs. Weiterhin betrifft die Erfindung einen Temperatursensor, der aus dem Verbundwerkstoff ausgeformt ist und ein Verfahren zur Herstellung des Temperatursensors.

Herkömmliche Temperatursensoren, die zur Temperaturmessung an Oberflächen von Bauteilen eingesetzt werden, weisen einen komplizierten Aufbau auf und sind aufwendig und kostenintensiv herzustellen.

DE 199 52 127 A1 betrifft einen keramischen Temperaturfühler, der ein Kompositmaterial enthält, das durch Keramisieren eines siliziumorganischen Polymers und eines Metallsilizids als Füllstoff mit PTC-Charakteristik hergestellt ist.

EP 1 122 211 A offenbart ein PTC-Komposit-Material mit einer Matrix aus keramischem Material, das mit Me-talloxiden dotiert ist, und in das eine leitfähige Phase (Silizide, Nitride, Carbide und Boride) in Form von Partikeln eingelagert.

EP 1 231 613 A betrifft Widerstandselemente mit PTC-Verhalten, die einen Verbundstoff aus einer mit pulverförmigem Füllstoff gefüllten Polymermatrix enthalten. Das Polymer ist Polyethylen, der Füllstoff Titandiboridpulver.

EP 0 901 134 A offenbart ein Kompositmaterial, das aus Co₃₋ₓRu_{x-y}M_{y}O₄ mit 0 ≤ x, y ≤ 2 und 0,1 ≤ x-y ≤ 1 und einer Glasmatrix gebildet ist.

US 6,218,928 B1 offenbart einen PTC-Thermistor, der aus einer keramischen Matrix und einer elektrisch leitfähigen Phase aus Bi oder einer Bi-Legierung besteht. Die Matrix enthält ein Material aus (Bi₁₋ₐAₐ)(Ti_{1-b}B_{b})ₓO_{y}.

US 5,568,116 offenbart in dem Abschnitt, der sich mit dem verwandten Stand der Technik auseinandersetzt, Materialien für Thermistoren, die bei höheren Temperaturen verwendet werden können, und nennt dabei Verbindungen mit Spinell-Struktur, wie NiAl₂O₄ und CoAl₂O₄, und Verbindungen mit Perowskitstruktur. US 2008/006796 A1 und EP 0 649 150 A1 offenbaren jeweils einen Verbundwerkstoff aus einem Perowskit der Formel ABO₃ (BaTiO₃) und einer Matrix aus einem Polymer, beispielsweise einem Thermo- und/oder Duroplast und/oder einem Elastomer.

Aufgabe der Erfindung ist es, einen Verbundwerkstoff zur Temperaturmessung sowie einen Temperatursensor, der aus dem Verbundwerkstoff ausgeformt ist, bereitzustellen. Diese Aufgabe wird durch einen Verbundwerkstoff gemäß dem Anspruch 1 und durch einen Temperatursensor gemäß dem Anspruch 5 gelöst. Eine weitere Aufgabe der Erfindung ist es, einfache und kostengünstige Verfahren zur Herstellung des Verbundwerkstoffes und zur Herstellung des Temperatursensors bereitzustellen. Diese Aufgaben werden gemäß den Ansprüchen 4 und 12 gelöst. Weitere Ausführungsformen der Vorrichtungen und der Verfahren sind Gegenstand weiterer Ansprüche.

Der erfindungsgemäße Verbundwerkstoff zur Temperaturmessung weist einen keramischen Füllstoff und eine den Füllstoff einbettende, formbare Matrix auf. Der keramische Füllstoff weist dabei einen positiven oder negativen Temperaturkoeffizienten des elektrischen Widerstands auf. Der Verbundwerkstoff weist weiterhin eine Widerstands-Temperatur-Kennlinie auf, die durch den keramischen Füllstoff bestimmt ist. Damit wird ein Verbundwerkstoff bereitgestellt, der eine Widerstands-Temperatur-Kennlinie aufweist, die einen negativen Temperaturkoeffizienten (NTC) oder einen positiven Temperaturkoeffizienten (PTC) aufweist, und gleichzeitig ein formbarer Werkstoff ist. Der Verbundwerkstoff kann beliebig geformt werden und damit auch zu oberflächenmontierbaren Elementen, beispielsweise Folien, verarbeitet werden. Dadurch, dass der Verbundwerkstoff eine temperaturabhängige Widerstandskennlinie aufweist, kann der Verbundwerkstoff als Temperatursensor ausgeformt werden. Der Verbundwerkstoff kann weiterhin eine gute thermische Leitfähigkeit aufweisen.

Der Verbundwerkstoff kann weiterhin ein Material der Matrix aufweisen, das aus einer Gruppe ausgewählt ist, die Thermoplaste, Duroplaste, Elastomere oder Mischungen daraus umfasst. Als polymere Werkstoffe können beispielsweise Polyphenylensulfid (PPS) oder Polyamid (PA) eingesetzt werden. Diese Materialien sind gut formbar und bewirken, dass der Verbundwerkstoff gut verarbeitbar ist.

Der Füllstoff in dem Verbundwerkstoff ist als Vielzahl von Partikeln in der Matrix vorhanden. Somit kann ein pulverförmiges keramisches Füllstoffmaterial, das NTC- oder PTC-Eigenschaften aufweist, in eine Matrix eingemischt werden.

Weiterhin können die Partikel des keramischen Füllstoffs in der Matrix einen Füllgrad von 50% bis 95% aufweisen. Die Partikel können durchgehende Strompfade in der Matrix bilden. Durch einen Füllgrad der Partikel von 50% bis 95% in der Matrix können durchgehend gebildete Strompfade der Keramikpartikel für den Stromfluss gewährleistet werden. Eine Unterbrechung der Strompfade und damit des Stromflusses durch das Matrixmaterial wird somit verhindert. Somit wird das elektrische Verhalten des Verbundstoffs weitgehend durch den keramischen Füllstoff bestimmt. Der Verbundwerkstoff verändert seinen elektrischen Widerstand in Abhängigkeit von der Temperatur, weist also eine NTC- oder PTC-Kennlinie auf, und kann somit als Temperatursensor eingesetzt werden. Der Füllgrad der Keramikpartikel in der Matrix ist weiterhin gering genug, um eine Verformbarkeit des Verbundwerkstoffs zu ermöglichen.

Der Füllstoff in dem Verbundwerkstoff weist ein Material auf, das einen elektrisch leitfähigen Spinell der Formel A^{II}B^{III}₂O₄, wobei A ein jeweils zweiwertiges Metall darstellt und B jeweils ein dreiwertiges Metall. A kann beispielsweise Nickel, B beispielsweise Mangan umfassen. In diesem Fall handelt es sich um ein Keramikmaterial, das einen negativen Temperaturkoeffizienten aufweist. Keramiken, die positive Temperaturkoeffizienten aufweisen oder die eine andere Zusammensetzung und einen negativen Temperaturkoeffizienten aufweisen, können gleichermaßen eingesetzt werden. Das Keramikmaterial kann weiterhin auch Dotierstoffe umfassen, die beispielsweise aus Metalloxiden ausgewählt sind.

Es wird weiterhin ein Verfahren zur Herstellung eines Verbundwerkstoffes mit den oben genannten Eigenschaften angegeben. Das Verfahren weist die Verfahrensschritte
A) Herstellung des keramischen Füllstoffs,
B) Bereitstellen der Matrix und
C) Mischen des Füllstoffs und der Matrix
auf. Somit wird ein einfaches Verfahren angegeben, mit dem ein Verbundwerkstoff gemäß den oben genannten Eigenschaften hergestellt werden kann.

Weiterhin kann im Verfahrensschritt A) Keramikgranulat gesintert, gepresst und zu Pulver gemahlen werden. Damit wird ein Keramikmaterial bereitgestellt, das in Pulverform einfach mit dem Matrixmaterial gemischt werden kann.

Im Verfahrensschritt B) kann eine Matrix aus einer Gruppe ausgewählt werden, die glasartige Werkstoffe, Thermoplaste, Duroplaste, Elastomere oder Mischungen daraus umfasst.

Weiterhin können im Verfahrensschritt C) der Füllstoff und die Matrix kontinuierlich gemischt werden. Dazu kann die Vermischung beispielsweise auf einem Doppelschneckenextruder mit zwei gleichlaufenden, parallel liegenden Förderschnecken erfolgen. Das Matrixmaterial und der Füllstoff werden kontinuierlich zusammengeführt und vermischt. Im Verfahrensschritt C) kann der Füllstoff und die Matrix auch diskontinuierlich gemischt werden. Dazu wird das Füllstoffmaterial oder das Matrixmaterial in einem Behälter vorgelegt, dann das Matrixmaterial oder das Füllstoffmaterial zugefügt und die Materialien in dem Behälter vermischt.

Weiterhin wird ein Temperatursensor angegeben, der aus einem Verbundwerkstoff gemäß den oben beschriebenen Eigenschaften ausgeformt ist und Kontaktierungen aufweist. Der Temperatursensor zeichnet sich dadurch aus, dass er frei von Umhüllungen oder Trägern herstellbar ist und auch seine Außenflächen von Verbundwerkstoff gebildet sein können. Der Temperatursensor kann die Temperaturen von an ihn angrenzenden Körpern und/oder Wärmestrahlung detektieren. Weiterhin kann der Temperatursensor, der aus dem Verbundwerkstoff ausgeformt ist, so geformt sein, dass er oberflächenmontierbar ist. Ein oberflächenmontierbarer Temperatursensor weist eine gute thermische und mechanische Ankopplung seiner Oberfläche an das Messobjekt auf.

Der Temperatursensor kann Kontaktierungen aufweisen, die auf der Oberfläche des Temperatursensors aufgebracht sind und/oder in den Temperatursensor integriert sind. Wenn die Kontaktierungen in den Temperatursensor integriert sind, befindet sich ein Teil der Kontaktierungen in dem Verbundwerkstoff, während der andere Teil aus dem Verbundwerkstoff herausragt und von außen kontaktierbar ist. Die Kontaktflächen zwischen den Kontaktierungen und dem Verbundwerkstoff können einen Einfluss auf den Widerstand des Temperatursensors, und damit auf die NTC- oder PTC-Kennlinie des Temperatursensors, haben. Je größer die Fläche der Kontaktierungen ist, die in Kontakt mit dem Verbundwerkstoff ist, desto niedriger wird der absolute Widerstand des Verbundwerkstoffs. Somit kann das elektrische Verhalten des Temperatursensors je nach Bedarf eingestellt werden. Das elektrische Verhalten des Temperatursensors wird weiterhin durch die geometrische Form des Verbundwerkstoffs sowie durch die Form und die Position der Kontaktierungen bestimmt. Dies ist dadurch bedingt, dass durch den Bulk-Effekt die Leitfähigkeit des Temperatursensors durch das gesamte Volumen des Werkstoffs bestimmt ist.

Der Temperatursensor kann eine dreidimensionale geometrische Form aufweisen. Er kann beispielsweise als Folie ausgeformt sein, die flexibel sein kann. Weiterhin kann der Temperatursensor quaderförmig sein und/oder abgerundete Ecken aufweisen. Weitere geometrische Formen, wie beispielsweise Zylinder oder individuell an die Umgebung angepasste unregelmäßige Formen sind ebenso herstellbar. Durch die Formbarkeit des Verbundwerkstoffs kann somit einfach und kostengünstig ein Temperatursensor hergestellt werden, der je nach Bedarf ausgeformt ist und ohne zusätzliche Elemente wie beispielsweise Umhüllungen oder Träger einsetzbar ist.

Sind elektrisch isolierende Oberflächen des Temperatursensors erforderlich, kann, beispielsweise durch einen zusätzlichen Spritzgussprozess, eine optionale, thermisch angekoppelte Verkapselung realisiert werden.

Es wird weiterhin ein Verfahren zur Herstellung eines Temperatursensors angegeben. Das Verfahren umfasst die Verfahrensschritte
D) Herstellung eines Verbundwerkstoffs gemäß dem oben beschriebenen Verfahren zur Herstellung des Verbundwerkstoffs,
E) Formen des Verbundwerkstoffs und
F) Aufbringen von Kontaktierungen.

Im Verfahrensschritt D) wird ein Verbundwerkstoff gemäß dem oben genannten Verfahren hergestellt. Weiterhin kann im Verfahrensschritt E) der Verbundwerkstoff zu einer dreidimensionalen symmetrischen Form geformt werden. Der Verbundwerkstoff kann zu Bändern oder Folien oder zu jeder beliebigen weiteren dreidimensionalen Form ausgeformt werden. Dazu kann beispielsweise eine Methode verwendet werden, die Spritzguss umfasst. Die Formung des Verbundwerkstoffs kann direkt nach der Herstellung des Verbundwerkstoffs in dem Doppelschneckenextruder durchgeführt werden. Dazu kann beispielsweise eine Breitschlitzdüse als Werkzeug verwendet werden. Das extrudierte Band kann über einen Glättkalander abgezogen und beispielsweise zu dünnen Bändern oder Folien geformt werden. Weiterhin kann eine Lochplatte als Werkzeug am Extruder eingesetzt werden. Die extrudierten Stränge werden dann mit einer geeigneten Schneidvorrichtung zu einem Granulat verarbeitet, das wiederum auf beliebigen Verarbeitungsmaschinen, beispielsweise Spritzgussmaschinen, in die gewünschte Form gebracht werden kann.

Weiterhin können im Verfahrensschritt F) die Kontaktierungen auf der Oberfläche des geformten Verbundwerkstoffs aufgebracht werden. Dazu kann eine Methode gewählt werden, die aus Siebdruck, Sputtern und Galvanik ausgewählt ist. Die Verfahrensschritte E) und F) können weiterhin gleichzeitig durchgeführt werden und die Kontaktierungen in den Verbundwerkstoff integriert werden. Beispielsweise kann ein integrierter Kontakt in einem Spritzgussteil hergestellt werden, der Enden, die aus dem Verbundwerkstoff herausragen, und Enden, die in dem Verbundwerkstoff eingeschlossen sind, aufweist.

Der Temperatursensor kann auf Körpern aufgebracht sein, deren Temperatur gemessen werden soll. Dadurch kann der Temperatursensor die Temperatur über die Kontaktfläche zu dem angrenzenden Körper messen. Als zusätzliche oder alternative Funktion kann der Temperatursensor auch zur Strahlungsmessung eingesetzt werden. Dazu kann ein Körper, beispielsweise eine Folie, ausgeformt sein, deren Matrixmaterial eine gute Strahlungsabsorption aufweist. Dazu kann das Matrixmaterial zum Beispiel schwarze Partikel aufweisen. Somit kann einwirkende Sonnenstrahlung oder Wärmestrahlung detektiert werden.

Anhand der Figuren soll die Erfindung näher erläutert werden:
- Figur 1: zeigt eine schematische Ansicht einer Ausführungsform des Temperatursensors,
- Figur 2: zeigt eine weitere schematische Ansicht einer Ausführungsform des Temperatursensors.

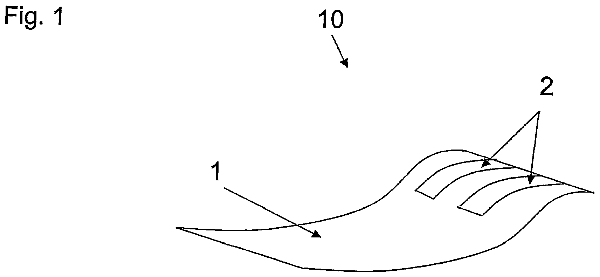

Figur 1 zeigt einen Temperatursensor 10 mit Kontaktierungen 2, die auf dem Verbundwerkstoff 1 aufgebracht sind. In diesem Ausführungsbeispiel ist der Temperatursensor 10 als Folie ausgeformt und die Kontaktierungen 2 auf der Oberfläche des Verbundwerkstoffs 1 aufgebracht. Die Folie kann flexibel sein und somit auf beliebigen Oberflächen aufgebracht werden, deren Temperatur gemessen werden soll. Der Verbundwerkstoff kann ein Matrixmaterial enthalten, das aus thermoplastischen Kunststoffen, Duroplasten, Elastomeren oder Kombinationen daraus ausgewählt ist. Beispielsweise können PPS oder PA eingesetzt werden. Die Matrix enthält einen keramischen Füllstoff, der einen positiven oder negativen Temperaturkoeffizienten des elektrischen Widerstands aufweist. Der Füllstoff liegt in der Matrix in Partikelform vor, wobei der Füllgrad in der Matrix so hoch ist, dass durchgehende Strompfade der Partikel in der Matrix gebildet werden können. Beispielsweise kann der keramische Füllstoff ein Material umfassen, das Metalloxide, wie beispielsweise MnNiO umfasst, und mit einem Füllgrad von 50% bis 95% in der Matrix vorhanden ist. Die Kontaktierungen 2 können alternativ auch in die Folie integriert sein und verschiedene Größen aufweisen.

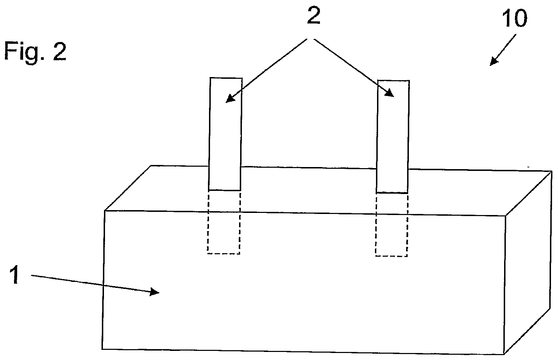

Figur 2 zeigt eine alternative Ausführungsform eines Temperatursensors 10. Hier ist der Verbundwerkstoff 1 als Quader ausgeformt und die Kontaktierungen 2 sind in den Quader integriert. Die Kontaktierungen 2 weisen Enden auf, die aus dem Quader herausragen, sodass sie von außen kontaktierbar sind, und sie weisen Enden auf, die in dem Quader eingeschlossen sind (angedeutet durch gestrichelte Linien). Ein solcher Temperatursensor 10 kann beispielsweise durch Spritzguss hergestellt werden, wobei die Kontaktierungen 2 während des Spritzgussverfahrens in den Verbundwerkstoff 1 integriert werden. Die Kontaktierungen 2 könnten alternativ auch auf der Oberfläche des Verbundwerkstoffs 1 aufgebracht sein (hier nicht gezeigt) und verschiedene Größen aufweisen. Das elektrische Verhalten des Temperatursensors kann durch die geometrische Form des Verbundstoffs 1 sowie durch die Größe, Form und Position der Kontaktierungen 2 bestimmt sein. Somit kann der Temperatursensor bezüglich seiner Form und seines elektrischen Verhaltens individuell für den jeweiligen Gebrauch gestaltet werden.

Die in den Figuren 1 und 2 gezeigten Ausführungsformen können beliebig variiert werden. Es ist weiterhin zu berücksichtigen, dass sich die Erfindung nicht auf die Beispiele beschränkt, sondern weitere, hier nicht aufgeführte Ausgestaltungen zulässt.

### Bezugszeichenliste

- 1: Verbundwerkstoff
- 2: Kontaktierung
- 10: Temperatursensor

## Patentansprüche

1. Verbundwerkstoff (1) zur Temperaturmessung aufweisend
- einen keramischen Füllstoff und
- eine den Füllstoff einbettende, formbare Matrix wobei der keramische Füllstoff einen positiven oder negativen Temperaturkoeffizienten des elektrischen Widerstands aufweist und der Verbundwerkstoff (1) eine Widerstands-Temperatur-Kennlinie aufweist, die durch den keramischen Füllstoff bestimmt ist
wobei der Füllstoff als eine Vielzahl von Partikeln in der Matrix vorhanden ist und wobei der Füllstoff einen elektrisch leitfähigen Spinell der Formel A^{II}B^{III}₂O₄, wobei A und B jeweils Metalle sind, umfasst,
wobei die Matrix ein Material aufweist, das aus einer Gruppe ausgewählt ist, die Thermoplaste, Duroplaste, Elastomere oder Mischungen daraus umfasst.

2. Verbundwerkstoff (1) nach Anspruch 1, wobei die Partikel einen Füllgrad in der Matrix von 50% bis 95% aufweisen.

3. Verbundwerkstoff (1) nach einem der vorhergehenden Ansprüche, wobei die Partikel durchgehende Strompfade in der Matrix bilden.

4. Verfahren zur Herstellung eines Verbundwerkstoffs (1) gemäß einem der Ansprüche 1 bis 3 aufweisend die Verfahrensschritte
A) Herstellung des keramischen Füllstoffs,
B) Bereitstellen der Matrix und
C) Mischen des Füllstoffs und der Matrix.

5. Temperatursensor (10), der aus einem Verbundwerkstoff (1) gemäß den Ansprüchen 1 bis 3 ausgeformt ist und Kontaktierungen (2) aufweist.

6. Temperatursensor (10) nach Anspruch 5, wobei die Kontaktierungen (2) auf der Oberfläche des Temperatursensors (10) aufgebracht sind und/oder in den Temperatursensor (10) integriert sind.

7. Temperatursensor (10) nach einem der Ansprüche 5 oder 6, der eine dreidimensionale geometrische Form aufweist.

8. Temperatursensor (10) nach Anspruch 7, der als Folie ausgeformt ist.

9. Temperatursensor (10) nach Anspruch 8, wobei die Folie flexibel ist.

10. Temperatursensor (10) nach Anspruch 8, wobei die geometrische Form quaderförmig ist.

11. Temperatursensor (10) nach einem der Ansprüche 7 bis 10, wobei die geometrische Form abgerundete Ecken aufweist.

12. Verfahren zur Herstellung eines Temperatursensors (10) gemäß den Ansprüchen 5 bis 11 mit den Verfahrensschritten
D) Herstellung eines Verbundwerkstoffs (1) gemäß einem der Ansprüche 1 bis 3,
E) Formen des Verbundwerkstoffs (1) und
F) Aufbringen von Kontaktierungen (2).

## Claims

1. Composite material (1) for temperature measurement, comprising
- a ceramic filler and
- a formable matrix which embeds the filler,
wherein the ceramic filler has a positive or negative temperature coefficient of electrical resistance, and the composite material (1) has a resistance-temperature characteristic determined by the ceramic filler, wherein the filler is present as a multitude of particles in the matrix and wherein the filler comprises an electrically conductive spinel of the formula A^{II}B^{III}₂O₄ where A and B are each metals,
wherein the matrix comprises a material selected from a group comprising thermoplastics, thermosets, elastomers or mixtures thereof.

2. Composite material (1) according to Claim 1, wherein the particles have a filling level in the matrix of 50% to 95%.

3. Composite material (1) according to either of the preceding claims, wherein the particles form continuous current paths in the matrix.

4. Process for producing a composite material (1) according to any of Claims 1 to 3, comprising the process steps of
A) producing the ceramic filler,
B) providing the matrix and
C) mixing the filler and the matrix.

5. Temperature sensor (10) which is formed from a composite material (1) according to Claims 1 to 3 and has contacts (2).

6. Temperature sensor (10) according to Claim 5, wherein the contacts (2) have been applied on the surface of the temperature sensor (10) and/or integrated into the temperature sensor (10).

7. Temperature sensor (10) according to either of Claims 5 and 6, which has a three-dimensional geometric form.

8. Temperature sensor (10) according to Claim 7, which is in the form of a film.

9. Temperature sensor (10) according to Claim 8, wherein the film is flexible.

10. Temperature sensor (10) according to Claim 8, wherein the geometric form is cuboidal.

11. Temperature sensor (10) according to any of Claims 7 to 10, wherein the geometric form has rounded corners.

12. Process for producing a temperature sensor (10) according to Claims 5 to 11, comprising the process steps of
D) producing a composite material (1) according to any of Claims 1 to 3,
E) forming the composite material (1) and
F) applying contacts (2).

## Revendications

1. Matériau composite (1) pour la mesure de la température, comprenant :
- une charge céramique et
- une matrice façonnable incorporant la charge,
la charge céramique présentant un coefficient de température positif ou négatif de la résistance électrique et le matériau composite (1) présentant une courbe caractéristique résistance-température qui est déterminée par la charge céramique,
la charge céramique étant présente dans la matrice sous la forme d'une pluralité de particules et la charge comprenant un spinelle électriquement conducteur de formule A^{II}B^{III}₂O₄, A et B étant chacun des métaux,
la matrice comprenant un matériau qui est choisi dans un groupe comprenant les thermoplastiques, les duroplastiques, les élastomères ou leurs mélanges.

2. Matériau composite (1) selon la revendication 1, dans lequel les particules présentent un degré de remplissage dans la matrice de 50 % à 95 %.

3. Matériau composite (1) selon l'une quelconque des revendications précédentes, dans lequel les particules forment des chemins d'écoulement continus dans la matrice.

4. Procédé de fabrication d'un matériau composite (1) selon l'une quelconque des revendications 1 à 3, comprenant les étapes de procédé suivantes :
A) la fabrication de la charge céramique,
B) la préparation de la matrice et
C) le mélange de la charge et de la matrice.

5. Capteur de température (10), qui est formé à partir d'un matériau composite (1) selon les revendications 1 à 3 et comprend des contacts (2).

6. Capteur de température (10) selon la revendication 5, dans lequel les contacts (2) sont disposés sur la surface du capteur de température (10) et/ou intégrés dans le capteur de température (10).

7. Capteur de température (10) selon l'une quelconque des revendications 5 ou 6, qui présente une forme géométrique tridimensionnelle.

8. Capteur de température (10) selon la revendication 7, qui est sous la forme d'une feuille.

9. Capteur de température (10) selon la revendication 8, dans lequel la feuille est flexible.

10. Capteur de température (10) selon la revendication 8, dans lequel la forme géométrique est parallélépipédique.

11. Capteur de température (10) selon l'une quelconque des revendications 7 à 10, dans lequel la forme géométrique présente des coins arrondis.

12. Procédé de fabrication d'un capteur de température (10) selon les revendications 5 à 11, comprenant les étapes de procédé suivantes :
D) la fabrication d'un matériau composite (1) selon l'une quelconque des revendications 1 à 3,
E) le façonnage du matériau composite (1) et
F) l'application de contacts (2).
